# EUROPÄISCHE PATENTSCHRIFT

(11) **EP 3 616 308 B1**
(45) Veröffentlichungstag und Bekanntmachung des Hinweises auf die Patenterteilung: **06.01.2021**
(21) Anmeldenummer: 19736578.6
(22) Anmeldetag: 03.06.2019
(51) Int. Cl.: H02K 11/33, H02K 5/22, H02K 11/20

(54) **ELEKTROMOTOR SOWIE VERFAHREN ZUM BEWERTEN EINES SCHWINGUNGSZUSTANDS EINES ELEKTROMOTORS**
ELECTRIC MOTOR AND METHOD FOR EVALUATING THE VIBRATION STATE OF AN ELECTRIC MOTOR
MOTEUR ÉLECTRIQUE ET PROCÉDÉ D'ÉVALUATION D'UN ÉTAT VIBRATOIRE D'UN MOTEUR ÉLECTRIQUE

(30) Priorität: 17.07.2018 DE 102018211838
(43) Veröffentlichungstag der Anmeldung: 04.03.2020
(73) Patentinhaber: Ziehl-Abegg SE, 74653 Künzelsau (DE)
(72) Erfinder: SCHMEZER, Joachim, 74676 Niedernhall (DE); SCHUEBEL, Dominik, 74653 Künzelsau (DE)
(74) Vertreter: Patent- und Rechtsanwälte Ullrich & Naumann
(86) Internationale Anmeldenummer: PCT/DE2019/200057
(87) Internationale Veröffentlichungsnummer: WO 2020/015796

(56) Entgegenhaltungen:
- DE-A1-102009 044 509
- DE-A1-102013 102 648
- JP-A- 2010 259 173
- JP-B2- 3 214 233
- US-A1- 2012 181 965

## Beschreibung

Die Erfindung betrifft einen Elektromotor mit einem Stator, einem relativ zu dem Stator drehbar gelagerten Rotor und einer Motorelektronik, wobei die Motorelektronik in einem Elektronikgehäuse angeordnet und auf einer Leiterplatte aufgebaut ist. Zudem betrifft die Erfindung einen Ventilator mit einem derartigen Elektromotor.

Die Erfindung betrifft ferner ein Verfahren zum Bewerten eines Schwingungszustands eines Elektromotors.

Elektromotoren sind während ihres Betriebs unterschiedlichsten Arten von Schwingungen und Vibrationen ausgesetzt. Diese Schwingungen können durch den Elektromotor selbst, durch die angetriebene Last oder durch die Umgebung, in der der Elektromotor installiert ist, entstehen. Wenn der Elektromotor beispielsweise Bestandteil eines Ventilators ist, so kann eine Unwucht des Laufrads oder Strömungsabrisse Vibrationen erzeugen. Zudem kann ein nicht-gleichförmiges Antriebsmoment, das beispielsweise durch eine pulsierende Zwischenkreisgleichspannung entstehen kann, die Schwingungen weiter verstärken. Wenn der Ventilator in einer Industrieumgebung eingebaut ist, können zusätzlich Schwingungen aus der Umgebung auf den Elektromotor übertragen werden. Wenn der Ventilator zudem bei einer Drehzahl betrieben wird, an der eine Resonanz des Ventilators auftritt, können die Schwingungen noch deutlicher ausgeprägt sein.

Motoren bzw. Ventilatoren werden üblicherweise vor der Auslieferung an den Kunden bzw. vor Einbau in ein Gehäuse dynamisch ausgewuchtet, indem unsymmetrische Gewichtsverteilungen oder sonstige schwingungserzeugende Umstände reduziert werden. Allerdings kann es bereits beim Einbau in ein Gehäuse, beim Transport zum Kunden, beim Aufbau in einer Kundenapplikation oder beim Endkunden zu Beschädigungen kommen, die die Wuchtgüte beeinträchtigen. Wenn ein Ventilator in Umgebungen mit anhaftender Verschmutzung, wie beispielsweise in der Landwirtschaft oder bei stark korrosiven Umgebungsbedingungen, betrieben wird, wird über die Lebensdauer des Ventilators ebenfalls die Wuchtgüte beeinträchtigt, da beispielsweise Anlagerungen oder Korrosionsstellen die Gewichtsverteilung beeinflussen können.

Unwuchten führen zu verstärkten Schwingungen, die wiederum die Bestandteile des Elektromotors sehr stark belasten. So werden beispielsweise die Lager durch Schwingungen erheblich stärker beansprucht, als dies bei einem weniger stark schwingenden System der Fall wäre. Ein hohes Maß an Schwingungen kann dazu führen, dass die Lebensdauer des Elektromotors und/oder seiner Komponenten deutlich reduziert wird. Daher ist es erstrebenswert, die Schwingungen, denen der Elektromotor ausgesetzt ist, zu messen.

Die EP 2 972 431 B1 offenbart einen Elektromotor mit Funktionsüberwachung der Motorlager. Hierzu ist ein Schwingungssensor mittels eines metallischen Körperschallelements am Statorflansch auf dessen vom Rotor abgewandten Seite befestigt. Dieser Schwingungssensor misst Vibrationen des Elektromotors. Auf diese Weise können Probleme mit dem Lager des Elektromotors erkannt werden. Durch die Befestigung des Schwingungssensors an dem Statorflansch können die Vibrationen des Elektromotors zwar effektiv und zuverlässig gemessen werden. Allerdings ist die Befestigung des Schwingungssensors am Statorflansch aufwändig und damit kostenintensiv. Des Weiteren können starke Erschütterungen des Elektromotors den Schwingungssensor beschädigen.

Aus der JP H07-324974 A ist eine Diagnoseanordnung bekannt, mit der eine Vibrationsbeanspruchung eines Elektromotors überwacht werden kann und Unregelmäßigkeiten erkannt und prognostiziert werden können. Hierzu sind an den Lagern des Rotors Schwingungssensoren angebracht, die Schwingungen des Elektromotors messen. Mittels einer Frequenzanalyse von gewonnenen Sensorsignalen wird ein Verschlechterungsindex bestimmt, der auf den Zustand des Elektromotors schließen lässt.

Andere Vorrichtungen und Verfahren zum Bewerten des Schwingungszustands eines Elektromotors sind in der DE 10 2009 044 509 A1, der JP 2010 259173 A und der US 2012/181965 A1 offenbart.

Der vorliegenden Erfindung liegt die Aufgabe zugrunde, einen Elektromotor, einen Ventilator und ein Verfahren der eingangs genannten Art derart auszugestalten und weiterzubilden, dass eine zuverlässige Messung von Schwingungen des Elektromotors und/oder eine zuverlässige Bestimmung eines Schwingungszustands des Elektromotors bei gleichzeitig niedrigen Kosten möglich ist.

Erfindungsgemäß wird die voranstehende Aufgabe durch die Merkmale des Anspruchs 1 gelöst. Danach ist der in Rede stehende Elektromotor dadurch gekennzeichnet, dass auf der Leiterplatte mindestens ein Schwingungssensor angeordnet ist, der zum Messen einer Beschleunigung und/oder einer Geschwindigkeit von Schwingungen des Elektromotors in mindestens einer Richtung ausgebildet ist, und dass die Leiterplatte mittels mindestens eines Kopplungselements schwingungstechnisch mit anderen Bestandteilen des Elektromotors gekoppelt ist, sodass zumindest Teile der Schwingungen des Elektromotors zu dem Schwingungssensor übertragen werden.

Hinsichtlich eines Ventilators ist die voranstehende Aufgabe durch die Merkmale des Anspruchs 12 gelöst. Danach umfasst der in Rede stehende Ventilator einen erfindungsgemäßen Elektromotor und ein Laufrad, wobei das Laufrad mit dem Rotor des Elektromotors verbunden ist.

Hinsichtlich des Verfahrens ist die voranstehende Aufgabe durch die Merkmale des Anspruchs 13 gelöst. Danach umfasst das in Rede stehende Verfahren die Schritte:
Erzeugen eines Messsignals mittels mindestens eines Schwingungssensors, wobei der mindestens eine Schwingungssensor auf einer Leiterplatte einer Motorelektronik des Elektromotors angeordnet ist und zum Messen einer Beschleunigung und/oder einer Geschwindigkeit von Schwingungen des Elektromotors in mindestens einer Richtung ausgebildet ist,
Ermitteln einer Amplitude und/oder einer Phase und/oder einer Frequenz des Messsignals zum Bestimmen mindestens einer Kenngröße der Schwingung des Elektromotors,
Vergleichen der bestimmten mindestens einen Kenngröße mit einer korrespondierenden Referenzkenngröße und
Bestimmen eines Schwingungszustands des Elektromotors basierend auf einem Ergebnis des Vergleichs der bestimmten mindestens einen Kenngröße mit der korrespondierenden Referenzkenngröße.

In erfindungsgemäßer Weise ist zunächst erkannt worden, dass auf das Befestigen eines Schwingungssensors direkt an einer Statorbuchse des Elektromotors verzichtet werden kann. Vielmehr können Informationen über das Schwingverhalten eines Elektromotors auch dadurch bezogen werden, dass auf einer Leiterplatte, die in einem Elektronikgehäuse des Elektromotors angeordnet ist, ein Schwingungssensor angeordnet ist und dieser Schwingungssensor die Beschleunigung und/oder die Geschwindigkeit von Schwingungen in mindestens einer Richtung misst. Es ist nämlich erkannt worden, dass Schwingungen des Elektromotors ausreichend gut an die Leiterplatte übertragen werden können, sodass ein Messen der Schwingungen des Elektromotors durch einen auf der Leiterplatte angeordneten Schwingungssensor möglich ist. Zwar können einzelne Frequenzen oder Bereiche des Spektrums der Schwingungen durch die Leiterplatte und deren Befestigungsmittel gedämpft oder herausgefiltert sein. Die bei dem Schwingungssensor ankommenden Schwingungen sind jedoch ausreichend aussagekräftig, um Informationen über das Schwingungsverhalten des Elektromotors gewinnen zu können. Daher werden erfindungsgemäß die Schwingungen des Elektromotors nicht direkt gemessen, sondern vielmehr die Schwingungen, die sich auf die Leiterplatte der Motorelektronik übertragen. Da die Motorelektronik ohnehin in einem Arbeitsschritt in den Elektromotor eingebaut werden muss, entsteht bei Anordnung des Schwingungssensors auf der Leiterplatte der Motorelektronik kein zusätzlicher Arbeitsschritt während der Montage des Elektromotors, so dass die Produktionskosten durch den Schwingungssensor praktisch nicht beeinflusst werden.

Damit das Kopplungsverhalten zwischen dem Schwingungssensor und anderen Bestandteilen des Elektromotors auf definierte Art und Weise erfolgt, wird erfindungsgemäß mindestens ein Kopplungselement verwendet, das die Leiterplatte und/oder den Schwingungssensor schwingungstechnisch mit anderen Bestandteilen des Elektromotors koppelt. Wenn der Zusammenhang zwischen den Schwingungen des Elektromotors und den durch den Schwingungssensor erfassten Messwerten, beispielsweise aus Kalibrierungsmessungen, bekannt ist, kann aus den Messwerten auf das Schwingungsverhalten des Elektromotors zurückgeschlossen werden.

Die "anderen Bestandteile des Elektromotors", zwischen denen das mindestens eine Kopplungselement eine Übertragung von Schwingungen verbessern soll, können durch die verschiedensten Komponenten des Elektromotors gebildet werden. Lediglich beispielhaft, jedoch nicht auf diese beschränkend können die "anderen Bestandteile des Elektromotors" durch eine Statorbuchse, ein Motorgehäuse, ein Lagerrohr, ein Statorwicklungspaket, eine Haltevorrichtung des Elektromotors oder das Elektronikgehäuse gebildet sein.

Die Motorelektronik, auf deren Leiterplatte der Schwingungssensor angeordnet ist, kann dabei verschiedenste Funktionen erfüllen. Im allereinfachsten Fall kann die Motorelektronik durch eine Leiterplatte mit Verbindungsleitern und Lötpads gebildet sein. Derartige Leiterplatten können beispielsweise eingesetzt werden, um einzelne Spulen des Stators miteinander zu verbinden. Vorzugsweise besteht die Motorelektronik jedoch zusätzlich aus weiteren elektrischen und/oder elektronischen Bauteilen. Dabei kann die Motorelektronik einfache Sensorik umfassen, die ein externes Steuergerät des Elektromotors mit Sensorsignalen, beispielsweise für die Drehzahl, versorgt. Die Motorelektronik kann auch Steueraufgaben übernehmen und/oder ein Leistungsteil umfassen. Ganz besonders bevorzugter Weise ist die Motorelektronik jedoch dazu ausgebildet, Wicklungen des Stators und/oder Wicklungen des Rotors mit einem Speisesignal zu versorgen. Hierzu kann die Motorelektronik einen Versorgungsspannungseingang aufweisen, in den eine Versorgungsspannung, beispielsweise eine Gleichspannung oder ein Drehstromsystem, eingegeben wird. Die Motorelektronik erzeugt dann aus der eingegebenen Versorgungsspannung ein System aus Speisesignalen, die den Rotor des Elektromotors zu einer Drehbewegung veranlassen.

Auch die Leiterplatte kann prinzipiell aus verschiedensten Materialien aufgebaut sein. Vorzugsweise ist die Leiterplatte jedoch aus einem starren Verbundwerkstoff hergestellt, auf dem Leiterbahnen aufgebracht sind. Häufig sind derartige Leiterplatten aus einem faserverstärkten Kunststoff hergestellt. Die Leiterplatte kann Leiterbahnen auf mehreren Ebenen aufweisen, beispielsweise auf einer Oberseite und einer Unterseite und gegebenenfalls ergänzend in einer oder mehreren Zwischenschichten, die zwischen der Ober- und der Unterseite eingebracht ist/sind. Entsprechende Leiterplatten sind aus der Praxis hinlänglich bekannt.

Der Schwingungssensor kann auf verschiedenste Arten gebildet sein. Wesentlich ist, dass der Schwingungssensor dazu in der Lage ist, Beschleunigungswerte und/oder Geschwindigkeitswerte für die gemessene Schwingung zu liefern. Der Schwingungssensor kann dabei durch ein MEMS (Micro Electro-Mechanical System)-Beschleunigungssensor, ein piezoelektrischer Beschleunigungssensor, ein Mikrofon (beispielsweise ein MEMS-Mikrofon) oder Dehnungsmessstreifen gebildet sein. Entsprechend geeignete Sensoren sind aus der Praxis hinlänglich bekannt.

Der Schwingungssensor ist - wie bereits angesprochen - zum Messen einer Beschleunigung und/oder einer Geschwindigkeit von Schwingungen des Elektromotors in mindestens einer Richtung ausgebildet. Dabei kann es Ausgestaltungen geben, bei dem das Messen in lediglich einer Richtung ausreichend ist. Dies kann beispielsweise dann der Fall sein, wenn der Elektromotor in dieser einen Richtung besonders stark zu Schwingungen neigt, während andere Richtungen vergleichsweise wenig Schwingungsneigung entwickeln. Vorzugsweise werden die Schwingungen jedoch in mehreren Richtungen, besonders bevorzugter Weise in drei Richtungen gemessen, wobei die einzelnen Richtungen nicht parallel zueinander angeordnet sind. Die Wahl der Richtungen, in denen Schwingungen gemessen werden, kann von den Schwingformen abhängen, in denen der Elektromotor üblicherweise schwingt. In einer bevorzugten Ausgestaltung sind die Richtungen, in denen Schwingungen gemessen werden, jedoch senkrecht zueinander ausgebildet, wobei die drei Richtungen beispielsweise ein klassisches kartesisches Koordinatensystem aufspannen können. Dabei kann beispielsweise eine erste Richtung parallel zur Achse des Elektromotors sein, während eine der weiteren Richtungen parallel zu einer Bezugsebene des Elektromotors angeordnet ist.

Beim Messen von Schwingungen in mehreren Richtungen kann ein einzelner Schwingungssensor verwendet werden, der zum Messen in jeweils den gewünschten Richtungen ausgebildet ist. So sind beispielsweise Schwingungssensoren aus der Praxis bekannt, die Schwingungen in drei senkrecht zueinander angeordneten Richtungen messen können. Allerdings kann der Schwingungssensor auch durch ein System von Schwingungssensoren gebildet sein, wobei jeder der Schwingungssensoren des Systems jeweils eine der mehreren Richtungen abdeckt. Diese Ausgestaltung bietet sich insbesondere dann an, wenn die Richtungen in denen Schwingungen gemessen werden sollen, nicht senkrecht zueinanderstehen. Durch ein derartiges System von Schwingungssensoren können relativ beliebige Achskonstellationen hergestellt werden. Wenn die einzelnen Schwingungssensoren des Systems nahe beieinander auf der Leiterplatte angeordnet sind, werden sich die Messungen des Systems aus Schwingungssensoren nur unwesentlich von Messungen eines einzelnen Schwingungssensors unterscheiden.

Prinzipiell kann das Elektronikgehäuse an verschiedensten Stellen des Elektromotors angeordnet sein. Wichtig ist lediglich, dass das Elektronikgehäuse schwingungstechnisch mit anderen Bestandteilen des Elektromotors gekoppelt ist. Dies kann auf einfache Art und Weise dadurch erreicht werden, dass das Elektronikgehäuse in dem Elektromotor integriert ist oder an der Außenseite eines Motorgehäuses angebracht ist. In dem zweitgenannten Fall kann beispielsweise das Elektronikgehäuse als eigenständiger, abgeschlossener Elektroniktopf implementiert sein, der an das Motorgehäuse angeflanscht wird. Vorzugsweise ist das Elektronikgehäuse an einer Statorbuchse des Elektromotors angeordnet, d.h. die Motorelektronik ist nahe der Achse der Welle angeordnet, wobei die Leiterplatte dann meist senkrecht zur Wellenachse angeordnet ist.

Des Weiteren ist es prinzipiell unerheblich, ob die Motorelektronik innerhalb des Elektronikgehäuses nach Fertigstellung des Elektromotors zugänglich ist oder nicht. Da bei aktuellen Elektromotoren die Motorelektronik vielfach mit einer Vergussmasse vergossen ist, ist die Motorelektronik ohnehin meist nicht direkt erreichbar. Dies kann sogar so weit gehen, dass das Elektronikgehäuse vollständig durch eine Umspritzung gekapselt ist, so dass faktisch kein zerstörungsfreier Zugang zu dem Elektronikgehäuse und der Motorelektronik besteht. Solange eine schwingungstechnische Kopplung zwischen dem Schwingungssensor und anderen Bestandteilen des Elektromotors erreichbar ist, kann auch ein derartiges Elektronikgehäuse die Anforderungen der vorliegenden Erfindung erfüllen.

Das Elektronikgehäuse kann prinzipiell verschiedenste Formgebungen aufweisen. Vorzugsweise weist das Elektronikgehäuse jedoch einen Boden und seitliche Wandungen auf. Bei einem derart ausgestalteten Elektronikgehäuse ist die Leiterplatte dann im Wesentlichen parallel zu dem Boden des Elektronikgehäuses angeordnet. In einer einfachsten Ausgestaltung ist ein derartiges Elektronikgehäuse topfförmig mit einer kreisrunden Grundfläche ausgebildet. Allerdings kann die Grundfläche auch andere Formen aufweisen. Regelmäßige Formen, wie beispielsweise Quadrat, Rechteck, Sechseck oder Achteck, können ebenso Verwendung finden wie unregelmäßige Formen. Ebenso müssen die seitlichen Wandungen nicht zwingend senkrecht zu dem Boden sein. Ein derartiges Elektronikgehäuse wird üblicherweise durch einen Deckel abgeschlossen sein, der einen offenen Bereich des Elektronikgehäuses abschließt. Dabei kann der Deckel beispielsweise parallel zu dem Boden angeordnet sein.

In einer Ausgestaltung ist der Schwingungssensor auf einer dem Boden des Elektronikgehäuses abgewandten Seite der Leiterplatte - Oberseite der Leiterplatte - angeordnet. Eine derartige Ausgestaltung hat insbesondere bei starker Schwingungsbeanspruchung des Elektromotors den Vorteil, dass ein relativ großer Abstand zwischen Elektronikgehäuse und Schwingungssensor entsteht.

In einer anderen Ausgestaltung ist der Schwingungssensor auf einer dem Boden des Elektronikgehäuses zugewandten Seite der Leiterplatte - Unterseite der Leiterplatte - angeordnet. Eine derartige Ausgestaltung bietet den Vorteil, dass Schwingungen bei einer entsprechenden Kopplung zwischen Boden und Schwingungssensor einfacher und effektiver zu dem Schwingungssensor geleitet werden und auf diese Weise präzisere Messungen möglich sein können.

Prinzipiell ist es auch denkbar, dass, insbesondere bei einem System von Schwingungssensoren, ein erster Teil der Schwingungssensoren an der Oberseite und ein zweiter Teil der Schwingungssensoren an der Unterseite der Leiterplatte angeordnet sind.

Unabhängig davon, ob der mindestens eine Schwingungssensor auf der Oberseite und/oder der Unterseite der Leiterplatte angeordnet ist, kann der Boden des Elektronikgehäuses im Bereich des mindestens einen Sensors eine Erhebung aufweisen, sodass der Abstand zwischen dem mindestens einen Schwingungssensor und dem Elektronikgehäuse reduziert ist. Dabei ist die Erhebung vorzugsweise an seiner Oberseite plan ausgebildet. "Im Bereich des Schwingungssensors" bedeutet dabei, dass bei einem Blick auf die Oberseite der Leiterplatte der Schwingungssensor bzw. die Schwingungssensoren und die Erhebung am Boden des Elektronikgehäuses sich nicht unerheblich überlappen. Dabei muss sich die Erhebung nicht zwingend über die gesamte Fläche, die von dem mindestens einen Schwingungssensor aufgespannt ist, erstrecken. Zur Vermeidung von Verzerrungen bietet es sich jedoch an, dass die Erhebung mindestens so groß ist, wie der Schwingungssensor oder - bei mehreren Schwingungssensoren - die durch die Schwingungssensoren aufgespannte Fläche.

Für die Anordnung des Schwingungssensors auf der Leiterplatte kann es von Vorteil sein, wenn Wissen über auftretende Schwingungsformen bei verschiedenen Anwendungen vorhanden ist. Damit kann der Schwingungssensor so positioniert und seine Messrichtungen so ausgerichtet werden, dass die erzeugten Messsignale ein möglichst eindeutiges und differenzierbares Abbild der Schwingungen und der Schwingungsformen liefern.

Prinzipiell kann das Kopplungselement durch verschiedenste Materialien gebildet sein. Wichtig ist, dass Schwingungen durch das Kopplungselement besser als in Luft übertragen werden und auf diese Weise eine verbesserte Kopplung zwischen dem Schwingungssensor und anderen Bestandteilen des Elektromotors hergestellt werden kann. Dabei empfiehlt es sich jedoch, dass keine direkte metallische Kopplung zwischen dem Schwingungssensor und anderen Bestandteilen des Elektromotors entsteht, da Metalle Schwingungen zwar sehr gut leiten, gleichzeitig aber eine praktisch nicht vorhandene Dämpfung bei starken Schwingungen liefern. Vorzugsweise ist daher das mindestens eine Kopplungselement aus einem Kunststoff gebildet, was zusätzlich eine elektrische Isolation des Sensors verbessert oder herstellt.

In einer Ausgestaltung umfasst das mindestens eine Kopplungselement eine Vergussmasse, die zumindest einen Teil eines Zwischenraums zwischen dem Elektronikgehäuse und der Leiterplatte ausfüllt. Wenn das Elektronikgehäuse einen Boden und seitliche Wandungen aufweist, so kann ein derartiger Zwischenraum beispielsweise zwischen dem Boden und der Leiterplatte gebildet sein. Derartige Vergussmassen sind bei Motorelektroniken weit verbreitet und sind meist auf Kunststoffbasis aufgebaut. Sie begünstigen beispielsweise den Abtransport von Wärme in Richtung Elektronikgehäuse und stabilisieren die Motorelektronik in dem Elektronikgehäuse.

In einer Modifikation dieser Ausgestaltung kann eine Trennwandung vorgesehen sein, die die Vergussmasse in eine erste Vergussmasse und eine zweite Vergussmasse unterteilt. Es bietet sich dabei an, wenn diese Trennwandung ebenso aus einem elektrisch nicht leitfähigen Material, vorzugsweise einem Kunststoff, besteht. Bei dieser Modifikation weist die zweite Vergussmasse eine geringere Elastizität auf als die erste Vergussmasse, d. h. die zweite Vergussmasse ist "härter" als die erste Vergussmasse. Zudem ist die zweite Vergussmasse dann bei dem Schwingungssensor angeordnet. Diese Unterteilung in erste und zweite Vergussmasse bietet den Vorteil, dass im Bereich des Schwingungssensors eine Vergussmasse verwendet werden kann, die eine günstige Schwingungsübertragung an den Schwingungssensor ermöglicht, während in einem anderen Bereich eine Vergussmasse eingesetzt werden kann, die beispielsweise eine besonders gute Wärmeabfuhr ermöglicht.

In einer anderen Ausgestaltung umfasst das mindestens eine Kopplungselement ein Klebepad oder ein Kleber, das/der zwischen Schwingungssensor und einem Teil des Elektronikgehäuses eingebracht ist. Auf diese Weise kann der Schwingungssensor relativ fest mit anderen Bestandteilen des Elektromotors gekoppelt werden, während weiterhin eine einfache Installation beim Einbringen der Leiterplatte in das Elektronikgehäuse erhalten bleibt. Der Kleber kann dabei als aushärtender Kleber, beispielsweise auf Epoxidbasis, ausgebildet sein. Vorzugsweise weisen das Klebepad und der Kleber elektrisch isolierende Eigenschaften auf, d.h. die elektrische Leitfähigkeit ist gering.

In einer weiteren Ausgestaltung umfasst das mindestens eine Kopplungselement eine Kunststoffumspritzung, die an zumindest Teilen des Elektromotors angebracht ist. Bei Elektromotoren ist es nicht unüblich, dass Bestandteile des Elektromotors während eines Spritzgussprozesses mit einem Kunststoff umspritzt und verbunden werden. Hierbei werden häufig thermoplastische oder duroplastische Werkstoffe eingesetzt. Auf diese Weise können beispielsweise Teile des bewickelten Blechpakets des Stators und Teile des Elektronikgehäuses durch eine Umspritzung verbunden werden. Dabei kann der Lagersitz Teil einer Paketisolierung oder Teil der Umspritzung sein. In derartigen Fällen kann diese Umspritzung ein Kopplungselement im Sinne der vorliegenden Erfindung bilden. Dabei kann zwischen Schwingungssensor und Umspritzung ein weiteres Kopplungselement, beispielsweise in Form eines Klebepads, angebracht sein. Vorzugsweise steht die Kunststoffumspritzung jedoch in direktem Kontakt mit dem mindestens einen Schwingungssensor.

In einer weiteren Ausgestaltung umfasst das mindestens eine Kopplungselement ein (mechanisches) Befestigungsmittel, das die Leiterplatte mit einem anderen Teil des Elektromotors mechanisch und/oder elektrisch verbindet. Dabei kann das Befestigungsmittel durch verschiedenste Mittel gebildet sein, die eine mechanische Verbindung und eine schwingungstechnische Kopplung erzeugen können. Lösbare Befestigungsmittel können ebenso eingesetzt werden wie nichtlösbare. Lediglich beispielhaft, jedoch nicht auf diese beschränkt sei auf die Verwendung einer Schraube, einer Niete, einer Klammer, eines Stiftes, eines Spannstifts, eines Kerbnagels oder dergleichen verwiesen. Je nach verwendetem Befestigungsmittel wird die Art der Kopplung anders erfolgen. Dabei kann das Befestigungsmittel beispielsweise einer Ausgestaltung als Schraube durch eine Bohrung in der Leiterplatte geführt und in ein Gewinde in dem Elektronikgehäuse eingeschraubt sein. Zur noch weiteren Verbesserung einer schwingungstechnischen Kopplung zwischen dem Schwingungssensor und anderen Bestandteilen des Elektromotors bietet es sich an, wenn das Befestigungsmittel nahe bei dem Schwingungssensor angeordnet ist. Dies bedeutet, dass bei Blick auf die Leiterplatte der Abstand zwischen Befestigungsmittel und Schwingungssensor im Vergleich zu den Ausmaßen der Leiterplatte deutlich geringer ist. Vorzugsweise beträgt der Abstand maximal 20 % der Ausmaße der Leiterplatte, besonders bevorzugter Weise maximal 10 % der Ausmaße. Gleichzeitig empfiehlt es sich, einen gewissen Mindestabstand zwischen Befestigungsmittel und Schwingungssensor nicht zu unterschreiten. Vorzugsweise beträgt der Abstand mindestens 5 % der Ausmaße der Leiterplatte.

Die vorgenannten Ausgestaltungen des mindestens einen Kopplungselements lassen sich relativ beliebig kombinieren. Einige Beispiele, bei denen einzelne der vorgenannten Kopplungselemente miteinander kombiniert sind, werden in den nachfolgend beschriebenen Ausführungsbeispielen noch näher beleuchtet. Ein Fachmann wird erkennen, dass und wie die verschiedenen Ausgestaltungen von Kopplungselementen auch auf andere Weise noch kombiniert werden können.

In einer Weiterbildung kann das Elektronikgehäuse vollständig oder in Teilen mit einem Kunststoff beschichtet sein oder es kann eine Kunststoffauskleidung in das Elektronikgehäuse gelegt sein. Eine derartige Weiterbildung kann beispielsweise dazu verwendet werden, um die Isolierung zwischen Motorelektronik und Elektronikgehäuse zu verbessern. Bei einem Elektronikgehäuse, das einen Boden und seitliche Wandungen aufweist, können beispielsweise der Boden und/oder die seitlichen Wandungen mit dem Kunststoff beschichtet oder bedeckt sein. Es wäre auch denkbar, dass lediglich Teile des Bodens oder Teile der seitlichen Wandungen mit Kunststoff überzogen oder durch eine Kunststoffauskleidung bedeckt sind.

Prinzipiell kann der Elektromotor verschiedentlich ausgebildet sein. Wichtig ist lediglich, dass eine Motorelektronik vorhanden ist, auf der der Schwingungssensor angebracht werden kann. In einer bevorzugten Ausgestaltung ist der Elektromotor jedoch durch einen EC-Motor (Electronically Commutated Motor) gebildet, bei dem die Motorelektronik ein System von Speisesignalen erzeugt, wobei das System von Speisesignalen ein Drehfeld in dem Elektromotor erzeugen kann, das eine Drehbewegung des Rotors hervorruft. Dabei kann der EC-Motor in Innenläuferbauweise oder in Außenläuferbauweise aufgebaut sein.

Das erfindungsgemäße Verfahren kann zum Bewerten eines Schwingungszustands eines Elektromotors genutzt werden. Dabei kann der Elektromotor durch einen erfindungsgemäßen Elektromotor gebildet sein. Bei dem erfindungsgemäßen Verfahren wird in einem ersten Schritt mittels mindestens eines Schwingungssensors ein Messsignal erzeugt, wobei das Messsignal eine Geschwindigkeit und/oder eine Beschleunigung von Schwingungen des Elektromotors in mindestens einer Richtung repräsentiert. Dabei umfasst das Messsignal vorzugsweise einen zeitlichen Verlauf und Frequenzanteile in einem Frequenzspektrum.

Dieses Messsignal wird in einem weiteren Schritt analysiert, indem eine Amplitude und/oder eine Phase und/oder eine Frequenz des Messsignals zum Bestimmen mindestens einer Kenngröße der Schwingungen des Elektromotors ermittelt wird. Die Amplitude des Messsignals bezeichnet dabei das Maß, in dem sich das Messsignal bewegt. In einem einfachsten Fall ist die Amplitude der maximale Betrag, den das Messsignal in dem betrachteten Messzeitraum annimmt. Denkbar wäre aber auch, die Amplitude als den Wert zu betrachten, den das Messsignal in dem betrachteten Messzeitraum im Mittel annimmt. Die Frequenz des Messsignals bezeichnet die spektralen Anteile, die das Messsignal aufweist. Dabei kann die "Frequenz des Messsignals" eine einzelne dedizierte Frequenz, mehrere dedizierte Frequenzen oder ein oder mehrere Frequenzbereiche bezeichnen. Die Phase des Messsignals bezeichnet die zeitlichen Zusammenhänge zwischen mehreren Teilbereichen des Messsignals. Dabei kann die Phase beispielsweise einen Zusammenhang zwischen Wirk- und Blindanteilen des Messsignals betreffen. Beim Messen von Schwingungen in mehreren Richtungen bezeichnet die Phase jedoch vorzugsweise der zeitliche Zusammenhang zwischen den Messsignalen in den einzelnen Richtungen. Aus der Amplitude, der Phase und/oder der Frequenz des Messsignals lässt sich ableiten, wie stark und in welchen Formen der Elektromotor schwingt. Damit kann auf diese Weise mindestens eine Kenngröße der Schwingungen des Elektromotors ermittelt werden.

In einem nächsten Schritt wird die derart bestimmte mindestens eine Kenngröße mit einer korrespondierenden Referenzgröße verglichen. Dies bedeutet beispielsweise, dass die Amplitude der Messgröße mit einer Referenzamplitude verglichen wird, beispielsweise einer maximal zulässigen Amplitude. Dabei ist es auch möglich, dass mehrere Kenngrößen mit mehreren jeweils korrespondierenden Referenzgrößen verglichen werden. Durch Kombinieren mehrerer Kenngrößen lässt sich ein umfassenderes Bild des Schwingungszustands des Elektromotors ermitteln als dies durch eine einzelne Kenngröße möglich wäre.

Aus dem Ergebnis des Vergleichens der bestimmten mindestens einen Kenngröße mit der korrespondierenden Referenzkenngröße bzw. den korrespondierenden Referenzkenngrößen wird dann in einem weiteren Schritt der Schwingungszustand des Elektromotors bestimmt. Hierbei können Kenntnisse über das Schwingungsverhalten des Elektromotors (beispielsweise aus Kalibrierungsmessungen) oder Kenntnisse aus einem baugleichen oder sehr ähnlichen Elektromotor verwendet werden.

In einer Weiterbildung des erfindungsgemäßen Verfahrens wird basierend auf dem bestimmten Schwingungszustand eine Warnmeldung erzeugt und/oder Maßnahmen zum Schutz des Elektromotors eingeleitet. Prinzipiell sind verschiedenste Reaktionen denkbar, die auf den bestimmten Schwingungszustand eingehen. Eine Warnmeldung kann das Erreichen oder Überschreiten eines maximal zulässigen Schwingungswertes anzeigen. Eine Warnmeldung kann jedoch auch signalisieren, dass eine besonders ungünstige Schwingungsform vorliegt, die den Elektromotor stark belastet. Wie die Warnmeldung ausgegeben wird, hängt von dem jeweiligen Anwendungsszenarium ab. So wäre es, insbesondere in Industrie 4.0 Umgebungen, denkbar, dass eine entsprechende Warnmeldung über ein Netzwerk versendet wird. Diese Warnmeldung kann beispielsweise von Wartungspersonal oder Bedienpersonal empfangen und geeignete Gegenmaßnahmen ergriffen werden. Eine Warnmeldung kann auch durch eine einfache Leuchtdiode ausgegeben werden, die beispielsweise in einem Normalbetrieb grün und bei einem ungünstigen Schwingungszustand rot leuchtet. Hier wäre es auch denkbar, dass beispielsweise bei Überschreiten eines ersten Schwingungsgrenzwertes die Leuchtdiode orange leuchtet. Eine Warnmeldung kann auch - insbesondere bei Umgebungen mit anhaftendem Schmutz - dazu genutzt werden, dass Reinigungs- und/oder Wartungsarbeiten ausgelöst werden.

Alternativ oder zusätzlich können basierend auf dem bestimmten Schwingungszustand Maßnahmen zum Schutz des Elektromotors eingeleitet werden. Diese Maßnahmen können beispielsweise beinhalten, dass die Drehzahl des Elektromotors verändert wird. Meist dürfte hier eine Reduzierung der Drehzahl zu einer Reduzierung der Schwingungen beitragen. Auf diese Weise kann der Elektromotor eventuell in einen weniger stark schwingenden Betriebszustand versetzt werden. Eine andere Maßnahme könnte beinhalten, dass die Ansteuerung in einen ruhigeren Betriebsmodus geschaltet wird, indem beispielsweise Ripple im Antriebsmoment stärker kompensiert sind.

In einer Ausgestaltung kann vor einem Vergleich der mindestens einen Kenngröße mit einer (jeweils) korrespondierenden Referenzkenngröße überprüft werden, ob die mindestens eine Kenngröße einen vordefinierten Grenzwert überschreitet. So kann beispielsweise ein Schwellwert definiert sein, über den die Amplitude des Messsignals mindestens gehen muss, bevor weitere Schritte durchgeführt werden. Wenn dieser Schwellwert durch das Messsignal nicht erreicht wird, lassen sich - zum Einsparen von Rechenressourcen - der Schritt des Vergleichens und des Bestimmens eines Schwingungszustands überspringen.

Nachfolgend werden nochmals einige Funktionen und Weiterbildungen stichpunktartig angeführt, die mit dem erfindungsgemäßen Elektromotor, dem erfindungsgemäßen Ventilator und dem erfindungsgemäßen Verfahren erfüllt werden können:
1) Erfassung von Schwingungswerten einer Motorelektronik zum Schutz der Elektronikbauteile, z.B. durch Drehzahlanpassung/Abschaltung bei kritischen Werten. Da der Sensor direkt an der Elektronik angebracht ist, können die auf die Motorelektronik auftreffenden Schwingungen direkt gemessen und eine mögliche Beschädigung der Elektronik kann abgeschätzt werden. Dies wäre ebenfalls mit einer separaten (externen) Leistungs- oder Steuerelektronik / Frequenzumrichter umsetzbar.
2) Erfassung von Schwingungswerten eines Gesamtsystems durch Kopplung des Motors, Ventilators, bzw. der Elektronik mit kundenseitigen Komponenten (wie z.B. Wärmetauscher, Lüftungskanäle, Wärmepumpe, Klimakastengehäuse etc.). Möglichkeit des Ausblendens von Resonanzen des Gesamtsystems durch Einstellen einer von der Solldrehzahl geringfügig abweichenden Drehzahl, bei der die Vibrationen reduziert sind.
3) Feststellung von Transportschäden durch Vergleich von Schwingungswerten bei der Inbetriebnahme des Ventilators beim Kunden mit einer abgespeicherten Referenzkurve der Endprüfung (vor Auslieferung) des Ventilators. Ausgabe einer Warnmeldung bei Überschreiten von Grenzwerten.
4) Nach Inbetriebnahme Feststellung einer langsamen Zunahme der Unwucht bei Verschmutzung oder Korrosion (über längere Zeiträume, z.B. Wochen oder Monate). Möglichkeit der Ausgabe einer Warnmeldung bzw. eines Hinweises auf eine erforderliche Reinigung des Ventilators und Ermittlung von Reinigungs- oder Wartungsintervallen.
5) Berechnung / Abschätzung des Verschleißzustandes der Lagersitze in der Statorbuchse über die Amplitude und/oder Frequenz der Schwingungen, Schwingformen, die Drehzahl, Einbaulage, rotierende Massen und/oder die Laufzeit (Lastprofil).
6) Erkennung eines Strömungsabrisses des Ventilators mit möglicher Ausgabe einer Warnmeldung bzw. möglicher Drehzahlanpassung, um den kritischen Betriebszustand zu verlassen. Ein Betrieb des Ventilators im Bereich des Strömungsabrisses führt normalerweise zu erhöhter Geräuschentwicklung, einem pulsierenden Luftstrom in der Nähe des Ventilators und zu höheren Vibrationspegeln als beim Normalbetrieb. Wenn ein Ventilator in der Strömungsabrisszone betrieben wird, beginnen die Schaufeln mit ihrer Eigenfrequenz zu vibrieren. Bei längerer Dauer dieses Zustandes kann es zu einem Ermüdungsbruch der Schaufeln kommen.
7) Identifizierung von Resonanzen und/oder den zugehörigen Schwingformen des Gesamtsystems. In Abstimmung mit der Platzierung und Ausrichtung des Sensors können mit Hilfe der Amplituden- und Phaseninformation des Sensorsignals spezifische Schwingformen identifiziert werden. Somit ist eine In-Betrieb-Modalanalyse möglich, die es erlaubt Drehzahlen/Lastzustände des Motors mit kritischen Schwingereignissen zu verknüpfen. Betrieb in oder nahe dieser Zustände hat einen negativen Einfluss auf die Lebensdauer der Anwendung. Ausgabe von Warnmeldungen oder aktive Maßnahmen, wie z.B. aktives Ausblenden einzelner kritischer Drehzahlbereiche können folgen.
8) Erfassung von Schwingungswerten einer Kundenumgebung durch Kopplung des Motors / Ventilators bzw. der Elektronik mit kundenseitigen Komponenten (wie z.B. Wärmetauscher, Lüftungskanäle, Wärmepumpe, Klimakastengehäuse etc.) bei stehendem Motor / Ventilator. Bei stehendem Motor können Störschwingungen, die aus der Kundenumgebung auf den Motor / Ventilator einwirken, erfasst und abgespeichert werden. Diese Messung kann bei stehendem Motor in gewissen Zeitintervallen durchgeführt werden und kann insbesondere zur Beurteilung einer Einbausituation oder zur Schadensdiagnose genutzt werden. Bei sehr hohen Schwingungswerten kann bereits vor Inbetriebnahme des Ventilators eine Warnmeldung ausgegeben werden.

Es gibt nun verschiedene Möglichkeiten, die Lehre der vorliegenden Erfindung in vorteilhafter Weise auszugestalten und weiterzubilden. Dazu ist einerseits auf die den nebengeordneten Ansprüchen nachgeordneten Ansprüche und andererseits auf die nachfolgende Erläuterung bevorzugter Ausführungsbeispiele der Erfindung anhand der Zeichnung zu verweisen. In Verbindung mit der Erläuterung der bevorzugten Ausführungsbeispiele der Erfindung anhand der Zeichnung werden auch im Allgemeinen bevorzugte Ausgestaltungen und Weiterbildungen der Lehre erläutert. In der Zeichnung zeigen
- Fig. 1: einen Schnitt durch ein erstes Ausführungsbeispiel eines erfindungsgemäßen Elektromotors, wobei eine Schraube und eine Vergussmasse als Kopplungselemente verwendet sind,
- Fig. 2: einen Schnitt durch ein zweites Ausführungsbeispiel eines erfindungsgemäßen Elektromotors ähnlich dem ersten Ausführungsbeispiel, wobei zusätzlich der Boden und die seitlichen Wandungen des Elektronikgehäuses mit einem Kunststoff beschichtet sind,
- Fig. 3: einen Schnitt durch ein drittes Ausführungsbeispiel eines erfindungsgemäßen Elektromotors, wobei der Boden des Elektronikgehäuses im Bereich des Schwingungssensors eine Erhebung aufweist,
- Fig. 4: einen Schnitt durch ein viertes Ausführungsbeispiel eines erfindungsgemäßen Elektromotors, wobei der Boden und Teile der seitlichen Wandungen des Elektronikgehäuses mit einem Kunststoff bedeckt sind und wobei lediglich in einem Teilbereich zwischen dem Boden des Elektronikgehäuses und der Platine eine Vergussmasse als Kopplungselement eingesetzt ist,
- Fig. 5: einen Schnitt durch ein fünftes Ausführungsbeispiel eines erfindungsgemäßen Elektromotors, wobei eine Schraube, eine Vergussmasse und ein Klebepad als Kopplungselemente eingesetzt sind,
- Fig. 6: einen Schnitt durch ein sechstes Ausführungsbeispiel eines erfindungsgemäßen Elektromotors, wobei eine Vergussmasse durch eine Trennwandung in eine erste und eine zweite Vergussmasse unterteilt ist,
- Fig. 7: einen Schnitt durch ein siebtes Ausführungsbeispiel eines erfindungsgemäßen Elektromotors, wobei eine Schraube und eine Kunststoffumspritzung als Kopplungselemente eingesetzt sind,
- Fig. 8: einen Schnitt durch ein achtes Ausführungsbeispiel eines erfindungsgemäßen Elektromotors, wobei eine Kunststoffumspritzung als Kopplungselement eingesetzt ist,
- Fig. 9: ein Diagramm mit beispielhaften Verläufen eines Schwingungswertes bei unterschiedlichen Drehzahlen und bei Messung des Schwingungssensors in unterschiedliche Richtungen und
- Fig. 10: ein Ablaufdiagramm eines Ausführungsbeispiels eines erfindungsgemäßen Verfahrens.

Alle in den Figuren dargestellten Ausführungsbeispiele erfindungsgemäßer Elektromotoren sind jeweils in Außenläuferbauform aufgebaut. Dies bedeutet, dass der Stator bei der Motorachse und der Rotor um den Stator herum angeordnet ist. In den Figuren ist der Übersichtlichkeit wegen jeweils der Rotor des Elektromotors nicht dargestellt. Dies bedeutet - selbstverständlicher Weise - nicht, dass der Elektromotor keinen Rotor aufweist.

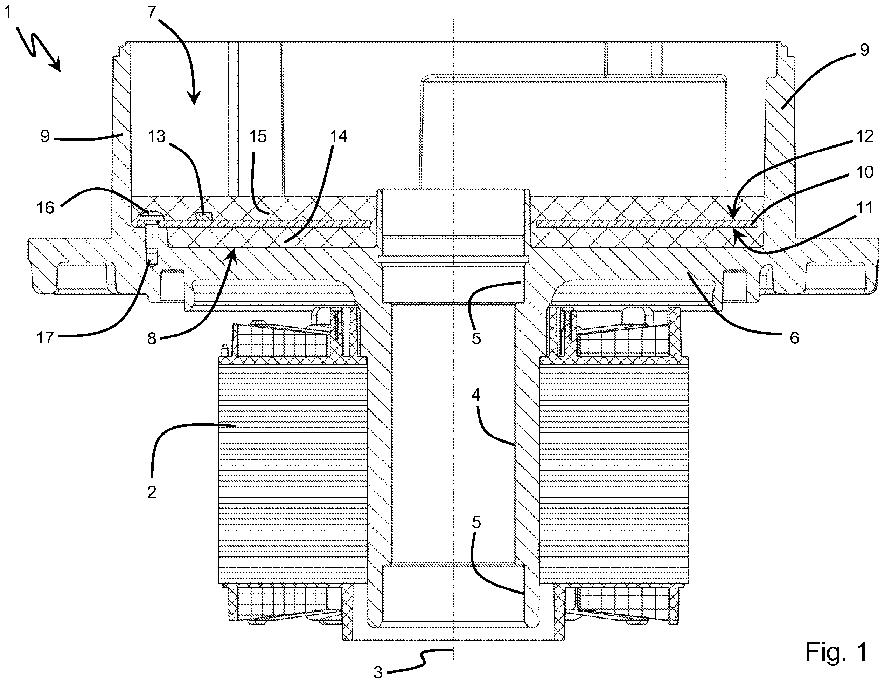

In den Figuren 1 bis 6 ist jeweils ein Schnitt durch einen Stator 2 eines erfindungsgemäßen Elektromotors 1 dargestellt. Bei einer Motorachse 3 ist ein Lagerrohr 4 ausgebildet, an dessen längsseitigen Enden jeweils ein Lageraufnahmebereich 5 ausgebildet ist. In die Lageraufnahmebereiche 5 sind nicht dargestellte Lager aufgenommen, über die eine ebenso nicht dargestellte Welle des Elektromotors drehbar gelagert ist. Eine Statorbuchse 6 ist dabei durch ein Aluminium-Bauteil gebildet, an dessen einen Ende das Lagerrohr 4 und an dessen anderen Ende ein Elektronikgehäuse 7 zur Aufnahme einer Motorelektronik ausgebildet ist. Das Elektronikgehäuse 7 weist dabei einen Boden 8 und seitliche Wandungen 9 auf. Die Motorelektronik erzeugt jeweils Speisesignale und gibt diese an die Stator- und/oder Rotorwicklungen aus. In den Figuren 1 bis 6 ist von der Motorelektronik der Übersichtlichkeit wegen lediglich eine Leiterplatte 10 abgebildet. Dabei wird nachfolgend die dem Boden 8 zugewandte Seite der Leiterplatte 10 als Unterseite 11 und die dem Boden 8 abgewandte Seite der Leiterplatte 10 als Oberseite 12 bezeichnet. Die verschiedenen, in den Figuren 1 bis 6 dargestellten Ausführungsbeispiele des erfindungsgemäßen Elektromotors unterscheiden sich durch die Anordnung des Schwingungssensors 13 auf der Leiterplatte 10 und die jeweils verwendeten Kopplungselemente.

In dem Ausführungsbeispiel der Fig. 1 ist der Schwingungssensor 13 auf der Oberseite 12 der Leiterplatte 10 angeordnet. Die Leiterplatte 10 ist in einer Vergussmasse 14, 15 eingebettet, wobei die Vergussmasse 14, 15 an dem Randbereich der Leiterplatte 10 verbunden ist. Dabei fungiert insbesondere der zwischen dem Boden 8 und der Unterseite 11 der Leiterplatte 10 eingeschlossene Teil der Vergussmasse 14 als Kopplungselement im Sinne der vorliegenden Erfindung und überträgt Schwingungen von der Statorbuchse 6 über den Boden 8 des Elektronikgehäuses 7 an die Leiterplatte 10 und damit an den Schwingungssensor 13. Als weiteres Kopplungselement ist eine Schraube 16 vorhanden, die in eine Bohrung 17 in dem Elektronikgehäuse 7 eingeschraubt ist. Die Schraube ist in dem dargestellten Ausführungsbeispiel nahe bei dem Schwingungssensor 13 angeordnet und sorgt damit ebenso dafür, dass Schwingungen von der Statorbuchse 6 über die Schraube 16 an die Leiterplatte 10 und damit an den Schwingungssensor 13 übertragen werden.

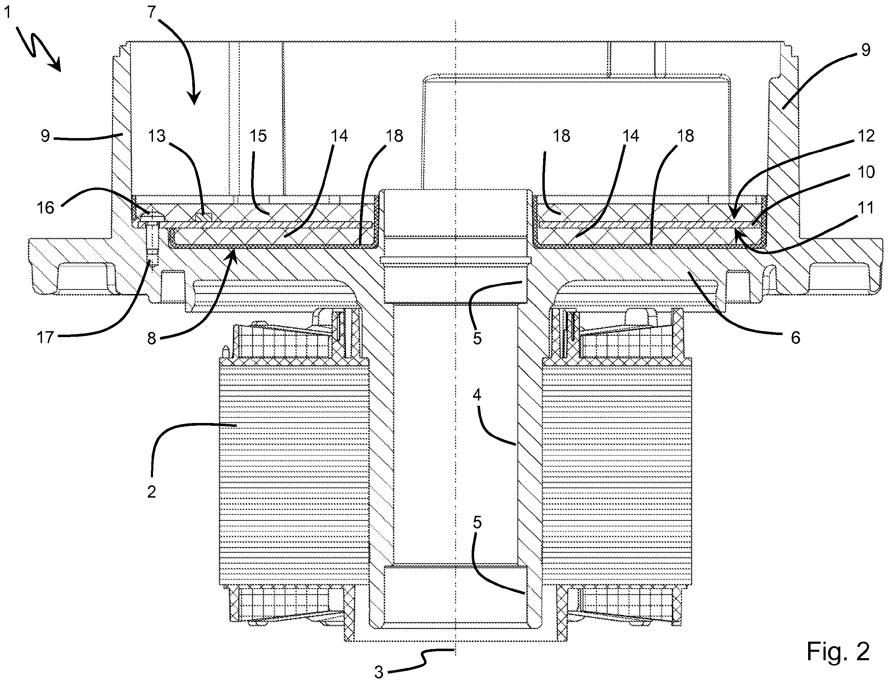

Das Ausführungsbeispiel der Fig. 2 ist sehr ähnlich zu dem Ausführungsbeispiel der Fig. 1. Ergänzend ist jedoch eine Kunststoffbeschichtung 18 am Boden 8 und an Teilen der seitlichen Wandung 9 des Elektronikgehäuses angebracht. Diese Kunststoffbeschichtung 18 sorgt für eine zusätzliche elektrische Isolierung, überträgt aber ebenso Schwingungen des Elektromotors, in diesem Fall Schwingungen von dem Boden 8 des Elektronikgehäuses 7 an die Vergussmasse 14. Daher kann auch diese Kunststoffbeschichtung 18 ein Kopplungselement im Sinne der vorliegenden Erfindung bilden.

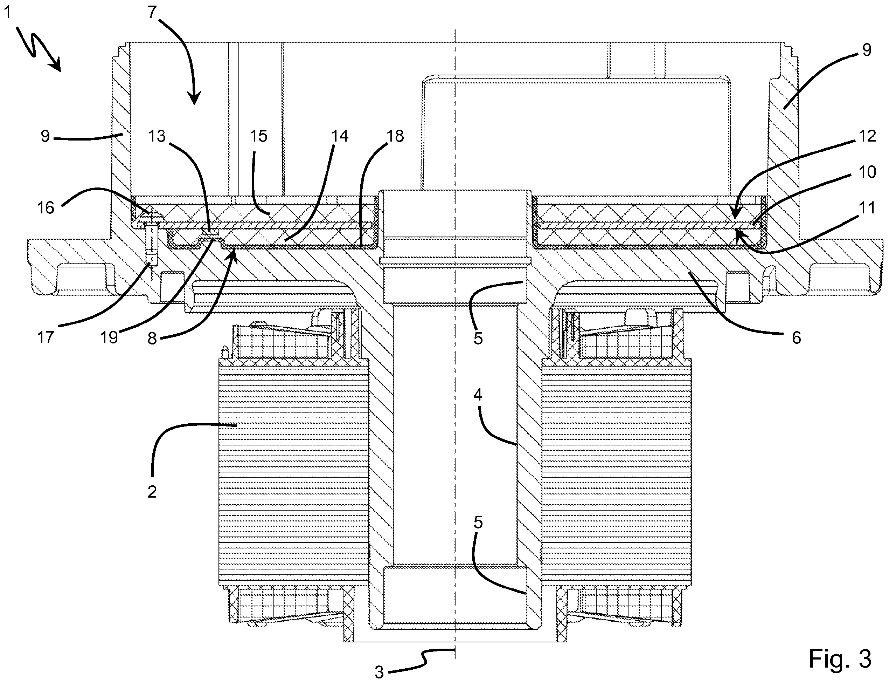

In dem Ausführungsbeispiel der Fig. 3 ist der Schwingungssensor 13 an der Unterseite 11 der Leiterplatte 10 angeordnet. Als Kopplungselemente dienen in diesem Ausführungsbeispiel eine Vergussmasse 14, 15, eine Schraube 16 und eine Kunststoffbeschichtung 18. Zur Reduzierung des Abstandes zwischen dem Boden 8 des Elektronikgehäuses 7 ist zudem im Bereich des Schwingungssensors 13 eine Erhebung 19 ausgebildet. Diese Erhebung 19 ist geringfügig breiter als die Ausdehnung des Schwingungssensors 13 und an deren Oberseite plan ausgebildet. Zwischen Erhebung 19 und Schwingungssensor 13 befindet sich nach wie vor etwas Vergussmasse 14 sowie die Kunststoffbeschichtung 18.

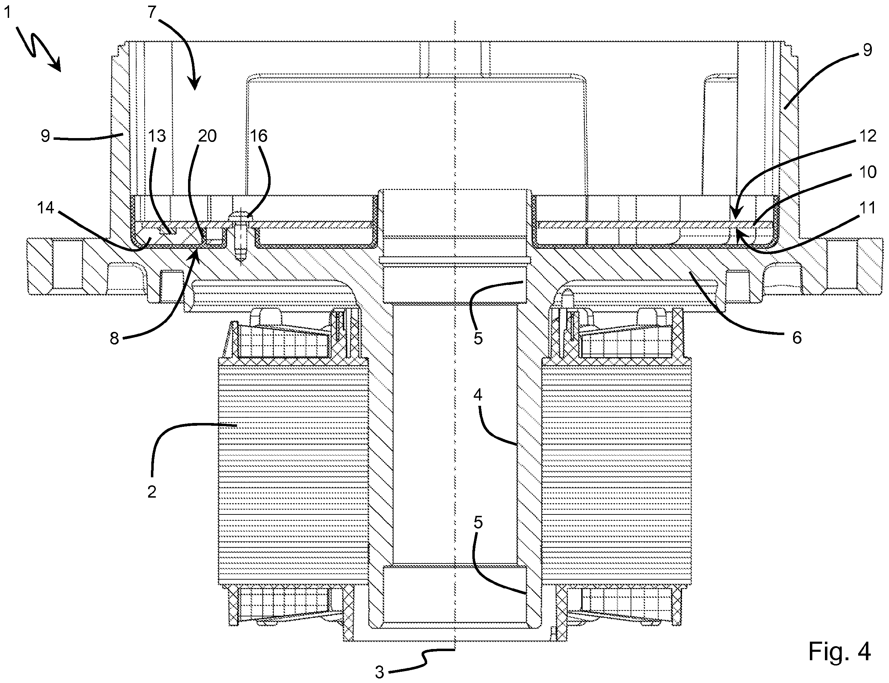

Bei dem Ausführungsbeispiel der Fig. 4 ist eine Trennwandung 20 ausgebildet, die in dem dargestellten Ausführungsbeispiel einstückig mit einer Kunststoffauskleidung 28 ausgebildet ist. Die Kunststoffauskleidung 28 bedeckt - ähnlich wie die Kunststoffbeschichtung 18 in Fig. 2 oder 3 - den Boden 8 und Teile der seitlichen Wandung 9. Die Trennwandung 20 trennt einen Bereich ab, in dem eine Vergussmasse 14 als Kopplungselement angeordnet ist. Die anderen Bereiche zwischen Leiterplatte 10 und Boden 8 und der Bereich oberhalb der Leiterplatte 10 sind nicht mit Vergussmasse ausgefüllt. Als weiteres Kopplungselement ist wieder eine Schraube 16 vorhanden, die nahe bei dem Schwingungssensor 13 angeordnet ist. Dabei ist die Schraube 16 in diesem Ausführungsbeispiel zwischen der Motorachse 3 und dem Schwingungssensor 13 platziert.

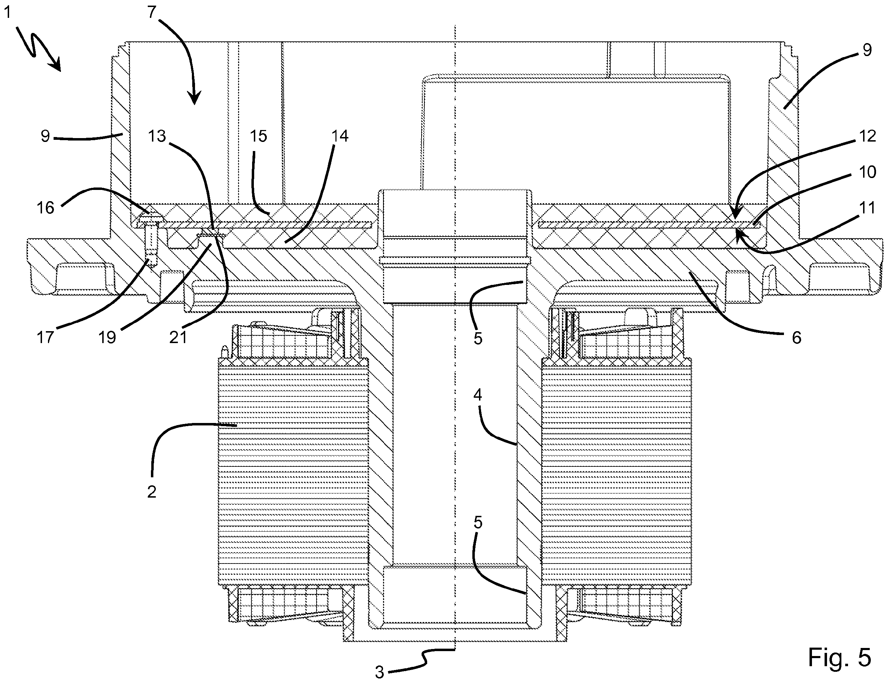

Das Ausführungsbeispiel der Fig. 5 umfasst als Kopplungselemente eine Vergussmasse 14, 15 und eine Schraube 16. Zudem ist am Boden 8 eine Erhebung 19 ausgebildet, die den Abstand zwischen Boden 8 und Schwingungssensor 13 reduziert. Zusätzlich ist als weiteres Kopplungselement ein Klebepad 21 angeordnet, das den Bereich zwischen Schwingungssensor 13 und Erhebung 19 ausfüllt und eine weitere schwingungstechnische Kopplung zwischen dem Schwingungssensor 13, der Leiterplatte 10 und weiteren Bestandteilen des Elektromotors herstellt.

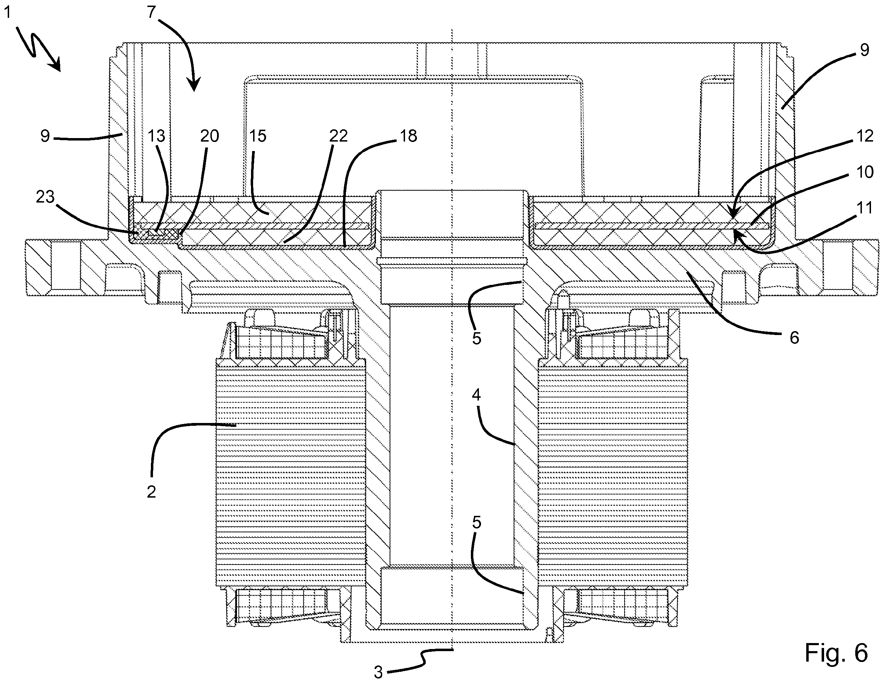

In Fig. 6 ist wieder eine Trennwandung 20 vorgesehen, die hier jedoch die Vergussmasse zwischen dem Boden 8 und der Leiterplatte 10 in eine erste Vergussmasse 22 und eine zweite Vergussmasse 23 unterteilt. Dabei weist die zweite Vergussmasse 23 eine geringere Elastizität auf als die erste Vergussmasse 22, so dass die zweite Vergussmasse 23 "härter" ist als die erste Vergussmasse 22. Auf diese Weise wird die zweite Vergussmasse 23 eine bessere Kopplung zwischen Schwingungssensor 13 und anderen Bestandteilen des Elektromotors herstellen, was sich insbesondere durch eine bessere Übertragung höherer Frequenzen ausdrückt.

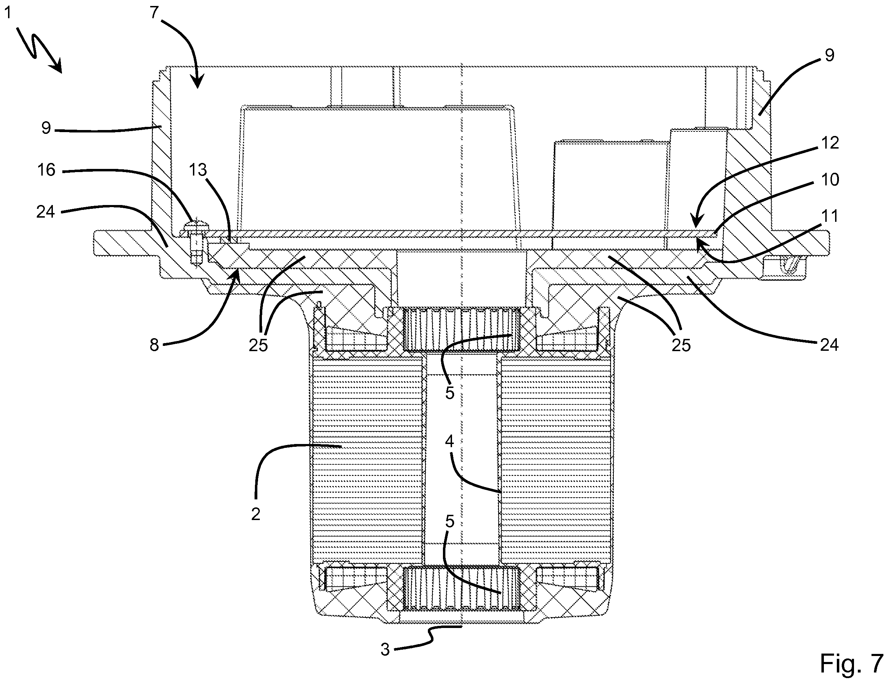

In Fig. 7 ist ein anderes Ausführungsbeispiel eines erfindungsgemäßen Elektromotors dargestellt. Das Elektronikgehäuse 7 ist hier durch ein Aluminiumbauteil 24 gebildet, das einen Boden 8 und seitliche Wandungen 9 aufweist. Im Boden 8 sind Löcher (nicht dargestellt) ausgebildet, durch die eine Kunststoffumspritzung 25 während eines Spritzgussprozesses dringen kann. Die Kunststoffumspritzung verbindet den Stator 2 mit dem Elektronikgehäuse 7 und ist als BMC (Bulk Molded Compound) ausgeführt. Die Kunststoffumspritzung steht in direkten Kontakt zu dem Schwingungssensor 13 und dient als Kopplungselement im Sinne der vorliegenden Erfindung. Ergänzend ist als weiteres Kopplungselement eine Schraube 16 vorhanden, die in ein Gewinde in dem Aluminiumbauteil 25 geschraubt ist.

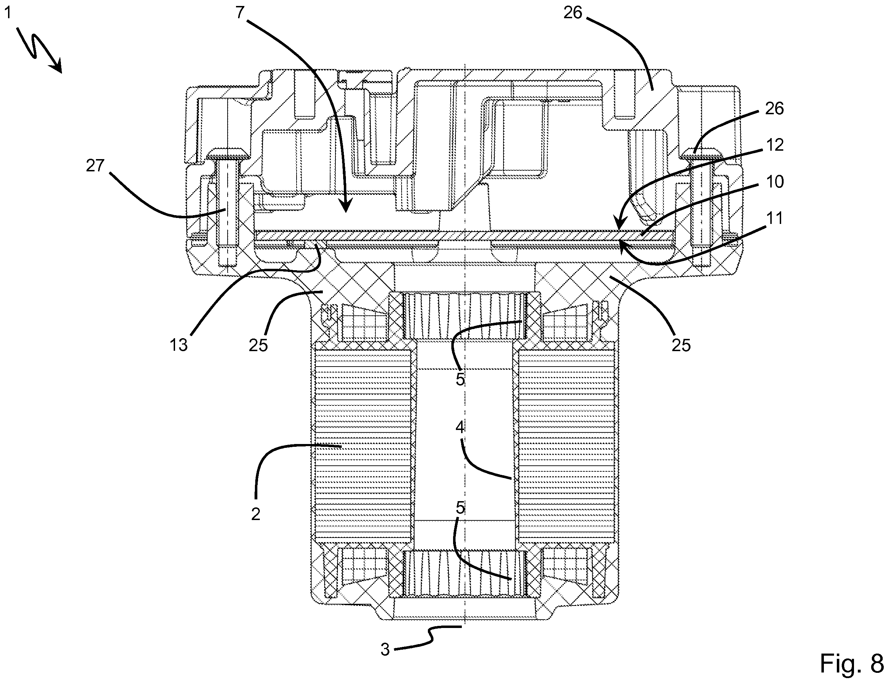

Eine relativ ähnliche Ausgestaltung ist in Fig. 8 wiedergegeben, wobei hier das Elektronikgehäuse 7 kein Aluminiumbauteil aufweist sondern das Elektronikgehäuse 7 durch die Kunststoffumspritzung 25 selbst gebildet ist. Auch hier bildet die Kunststoffumspritzung 25 ein Kopplungselement im Sinne der vorliegenden Erfindung und der Schwingungssensor 13 steht in direktem Kontakt zu der Kunststoffumspritzung. Zusätzlich ist ein Deckel 26 dargestellt, der eine offene Seite des Elektronikgehäuses abschließt. Dieser Deckel 26 ist mit Schrauben 27 mit der Kunststoffumspritzung verbunden.

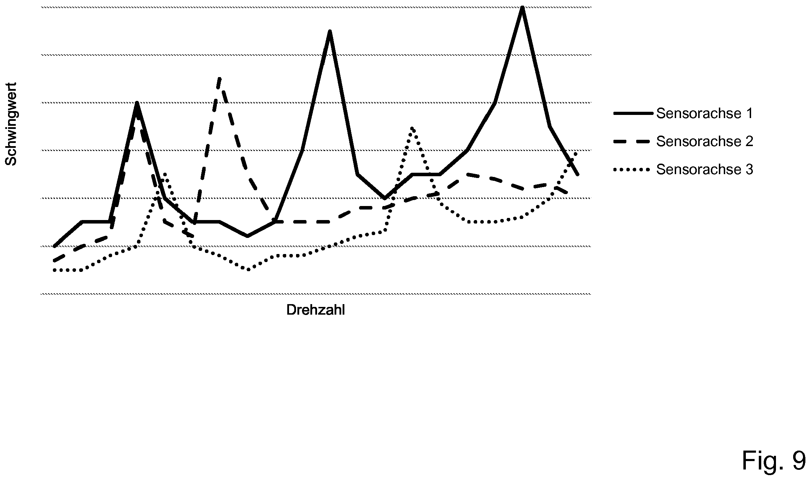

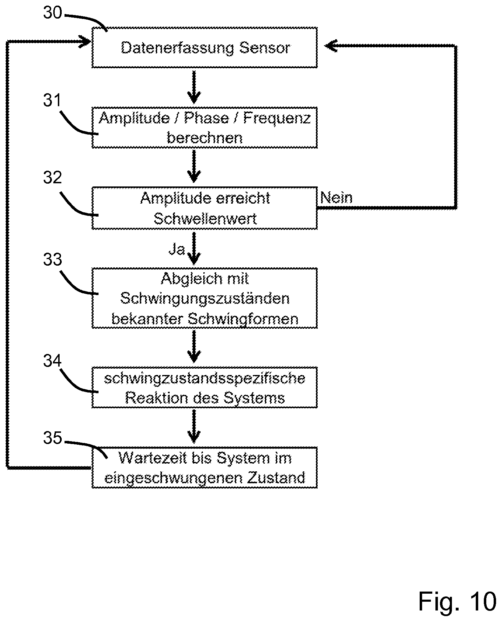

Fig. 9 zeigt ein Diagramm mit verschiedenen Signalverläufen, wie sie an einem Schwingungssensor eines Elektromotors entstehen können. Ein derartiger Schwingungssensor kann beispielsweise ein Schwingungssensor 13 in einem Elektromotor der zuvor beschriebenen Ausführungsbeispiele sein. Die drei dargestellten Signalverläufe stellen dabei beispielhafte Messsignale eines Schwingungssensors in drei verschiedenen Richtungen dar. Dabei sind die drei Richtungen jeweils senkrecht zueinander ausgebildet. Die durchgezogene Linie stellt ein Messsignal in einer ersten Sensorachse dar, die gestrichelte Linie ein Messsignal in einer zweiten Sensorachse und die punktierte Linie ein Messsignal in einer dritten Sensorachse. Auf der Abszisse ist die Drehzahl, auf der Ordinate eine Amplitude des Messwerts dargestellt. Es ist zu erkennen, dass sich bei unterschiedlichen Drehzahlen in unterschiedlichen Sensorachsen unterschiedliche Signalverläufe ausbilden. Diese Unterschiede in verschiedenen Richtungen können für ein erfindungsgemäßes Verfahren verwendet werden, wie es beispielsweise in Fig. 10 dargestellt ist.

In Fig. 10 ist ein Ablaufdiagramm eines Ausführungsbeispiels eines erfindungsgemäßen Verfahrens dargestellt. In einem ersten Schritt 30 werden Messwerte der Sensoren in mindestens einer Richtung erfasst. In diesem Ausführungsbeispiel werden Messwerte in drei Richtungen / Sensorachsen erfasst. In Schritt 31 werden diese Messwerte analysiert und dabei die Amplitude, die Phase und die Frequenz des Messsignals berechnet. Daraus ergeben sich Kenngrößen der Schwingungen des Elektromotors. In Schritt 32 wird die berechnete Amplitude mit einer Referenzamplitude verglichen. Sofern die Amplitude der Messsignale in allen Sensorachsen einen Schwellwert nicht überschreitet, wird die weitere Verarbeitung abgebrochen und zur neuen Datenerfassung in Schritt 30 zurückgekehrt. Überschreitet die Amplitude eines Messsignals in einer Sensorachse den Schwellwert, so werden die weiteren Schritte ausgeführt.

In Schritt 33 werden die ermittelten Messwerte und/oder die berechneten Kenngrößen mit Schwingungszuständen bekannter Schwingformen abgeglichen, d.h. die bestimmten Kenngrößen werden mit Referenzkenngrößen verglichen, wobei die Referenzkenngrößen jeweils bei bekannten Schwingformen aufgenommen worden sind. Diese Referenzkenngrößen können aus einer Datenbank stammen, deren Inhalt in einer Kalibrierungsmessung des Elektromotors entstanden ist. Alternativ kann die Datenbank auch Referenzkenngrößen eines baugleichen oder zumindest ähnlichen Elektromotors enthalten. Daraus kann geschlossen werden, in welchem Schwingungszustand sich der Elektromotor aktuell befindet.

In Schritt 34 wird auf den erkannten Schwingungszustand reagiert, indem beispielsweise die Drehzahl geringfügig reduziert wird. In Schritt 35 wird abgewartet, bis sich die Änderungen ausgewirkt haben und sich das System in einen eingeschwungenen Zustand bewegt hat. Dies geschieht üblicherweise binnen weniger Sekunden bis hin zu wenigen Minuten. Danach wird das Verfahren mit Schritt 30 wiederholt und eine neue Datenerfassung durchgeführt.

Hinsichtlich weiterer vorteilhafter Ausgestaltungen des erfindungsgemäßen Elektromotors bzw. des erfindungsgemäßen Verfahrens wird zur Vermeidung von Wiederholungen auf den allgemeinen Teil der Beschreibung sowie auf die beigefügten Ansprüche verwiesen.

Schließlich sei ausdrücklich darauf hingewiesen, dass die voranstehend beschriebenen Ausführungsbeispiele lediglich zur Erörterung der beanspruchten Lehre dienen, diese jedoch nicht auf die Ausführungsbeispiele einschränken.

### Bezugszeichenliste

- 1: Elektromotor (Rotor nicht dargestellt)
- 2: Stator
- 3: Motorachse
- 4: Lagerrohr
- 5: Lageraufnahmebereich
- 6: Statorbuchse
- 7: Elektronikgehäuse
- 8: Boden
- 9: seitliche Wandung
- 10: Leiterplatte
- 11: Unterseite
- 12: Oberseite
- 13: Schwingungssensor
- 14: Vergussmasse
- 15: Vergussmasse
- 16: Schraube
- 17: Bohrung
- 18: Kunststoffbeschichtung
- 19: Erhebung
- 20: Trennwandung
- 21: Klebepad
- 22: erste Vergussmasse
- 23: zweite Vergussmasse
- 24: Aluminiumbauteil
- 25: Kunststoffumspritzung
- 26: Deckel
- 27: Befestigungsschrauben
- 28: Kunststoffauskleidung

## Patentansprüche

1. Elektromotor mit einem Stator (2), einem relativ zu dem Stator drehbar gelagerten Rotor und einer Motorelektronik, wobei die Motorelektronik in einem Elektronikgehäuse (7) angeordnet und auf einer Leiterplatte (10) aufgebaut ist,
**dadurch gekennzeichnet, dass** auf der Leiterplatte (10) mindestens ein Schwingungssensor (13) angeordnet ist, der zum Messen einer Beschleunigung und/oder einer Geschwindigkeit von Schwingungen des Elektromotors (1) in mindestens einer Richtung ausgebildet ist, und dass die Leiterplatte (10) mittels mindestens eines Kopplungselements schwingungstechnisch mit anderen Bestandteilen des Elektromotors (1) gekoppelt ist, sodass zumindest Teile der Schwingungen des Elektromotors zu dem Schwingungssensor (13) übertragen werden.

2. Elektromotor nach Anspruch 1, **dadurch gekennzeichnet, dass** das Elektronikgehäuse (7) einen Boden (8) und vorzugsweise seitliche Wandungen (9) aufweist,
wobei der mindestens eine Schwingungssensor (13) vorzugsweise auf einer dem Boden (8) des Elektronikgehäuses (7) zugewandten Seite der Leiterplatte (10) angeordnet ist.

3. Elektromotor nach Anspruch 2, **dadurch gekennzeichnet, dass** der Boden (8) des Elektronikgehäuses (7) im Bereich des mindestens einen Schwingungssensors (13) eine Erhebung (19) aufweist, sodass der Abstand zwischen dem mindestens einen Schwingungssensor (13) und Elektronikgehäuse (7) reduziert ist.

4. Elektromotor nach einem der Ansprüche 1 bis 3, **dadurch gekennzeichnet, dass** das mindestens eine Kopplungselement aus einem Kunststoff hergestellt ist.

5. Elektromotor nach einem der Ansprüche 1 bis 4, **dadurch gekennzeichnet, dass** das mindestens eine Kopplungselement eine Vergussmasse (14, 15, 22, 23) umfasst, die zumindest Teile eines Bereichs zwischen dem Elektronikgehäuse (7) und der Leiterplatte (10) ausfüllt,
wobei die Vergussmasse mittels einer Trennwandung (20) in eine erste Vergussmasse (22) und eine zweite Vergussmasse (23) unterteilt sein kann, wobei die zweite Vergussmasse (23) eine geringere Elastizität aufweist als die erste Vergussmasse (22) und wobei die zweite Vergussmasse (23) bei dem Schwingungssensor (13) angeordnet ist.

6. Elektromotor nach einem der Ansprüche 1 bis 5, **dadurch gekennzeichnet, dass** das mindestens eine Kopplungselement ein Klebepad (21) oder ein Kleber umfasst.

7. Elektromotor nach einem der Ansprüche 1 bis 6, **dadurch gekennzeichnet, dass** das mindestens eine Kopplungselement eine Kunststoffumspritzung (25) umfasst, die an zumindest Teilen des Elektromotors (1) angebracht ist, wobei der mindestens eine Schwingungssensor (13) vorzugsweise in direktem Kontakt mit der Kunststoffumspritzung (25) ist.

8. Elektromotor nach einem der Ansprüche 1 bis 7, **dadurch gekennzeichnet, dass** das mindestens eine Kopplungselement ein Befestigungsmittel umfasst, wobei das Befestigungsmittel vorzugsweise durch eine Schraube (16), eine Niete, eine Klammer, ein Spannstift oder ein Kerbnagel gebildet ist, wobei das Befestigungsmittel vorzugsweise nahe bei dem Schwingungssensor (13) angeordnet ist.

9. Elektromotor nach einem der Ansprüche 1 bis 8, **dadurch gekennzeichnet, dass** das Elektronikgehäuse (7) an einer Statorbuchse (6) des Elektromotors (1) gebildet ist.

10. Elektromotor nach einem der Ansprüche 1 bis 9, **dadurch gekennzeichnet, dass** der Elektromotor (1) durch einen EC-Motor - Electronically Commutated Motor - gebildet ist.

11. Elektromotor nach einem der Ansprüche 1 bis 10, **dadurch gekennzeichnet, dass** das Elektronikgehäuse (7) einen Boden (8) und seitliche Wandungen (9) aufweist und dass der Boden (8) und/oder die seitlichen Wandungen (9) mit einem Kunststoff (18) beschichtet oder bedeckt ist/sind.

12. Ventilator mit einem Elektromotor nach einem der Ansprüche 1 bis 11 und einem Laufrad, wobei das Laufrad mit dem Rotor des Elektromotors verbunden ist.

13. Verfahren zum Bewerten eines Schwingungszustands eines Elektromotors, insbesondere eines Elektromotors nach einem der Ansprüche 1 bis 11, umfassend die Schritte:
Erzeugen eines Messsignals mittels mindestens eines Schwingungssensors, wobei der mindestens eine Schwingungssensor auf einer Leiterplatte (10) einer Motorelektronik des Elektromotors (1) angeordnet ist und zum Messen einer Beschleunigung und/oder einer Geschwindigkeit von Schwingungen des Elektromotors in mindestens einer Richtung ausgebildet ist,
Ermitteln einer Amplitude und/oder einer Phase und/oder einer Frequenz des Messsignals zum Bestimmen mindestens einer Kenngröße der Schwingung des Elektromotors,
Vergleichen der bestimmten mindestens einen Kenngröße mit einer korrespondierenden Referenzkenngröße und
Bestimmen eines Schwingungszustands des Elektromotors basierend auf einem Ergebnis des Vergleichs der bestimmten mindestens einen Kenngröße mit der korrespondierenden Referenzkenngröße.

14. Verfahren nach Anspruch 13, **dadurch gekennzeichnet, dass** basierend auf dem bestimmten Schwingungszustand eine Warnmeldung erzeugt und/oder Maßnahmen zum Schutz des Elektromotors eingeleitet werden.

15. Verfahren nach Anspruch 13 oder 14, **dadurch gekennzeichnet, dass** vor dem Vergleichen der bestimmten mindestens einen Kenngröße mit der korrespondierenden Referenzkenngröße überprüft wird, ob die mindestens eine Kenngröße einen vordefinierten Grenzwert überschreitet.

## Claims

1. Electric motor having a stator (2), a rotor which is rotatably supported relative to the stator and a motor electronic unit, wherein the motor electronic unit is arranged in an electronic housing (7) and constructed on a printed circuit board (10),
**characterised in that** on the printed circuit board (10) there is arranged at least one vibration sensor (13) which is constructed to measure an acceleration and/or a speed of vibrations of the electric motor (1) in at least one direction, and **in that** the printed circuit board (10) is coupled to other components of the electric motor (1) by means of at least one coupling element in terms of vibrations so that at least portions of the vibrations of the electric motor are transmitted to the vibration sensor (13).

2. Electric motor according to claim 1, **characterised in that** the electronic housing (7) has a base (8) and preferably side walls (9),
wherein the at least one vibration sensor (13) is preferably arranged at a side of the printed circuit board (10) facing the base (8) of the electronic housing (7).

3. Electric motor according to claim 2, **characterised in that** the base (8) of the electronic housing (7) in the region of the at least one vibration sensor (13) has a protrusion (19) so that the spacing between the at least one vibration sensor (13) and electronic housing (7) is reduced.

4. Electric motor according to any one of claims 1 to 3, **characterised in that** the at least one coupling element is produced from a plastics material.

5. Electric motor according to any one of claims 1 to 4, **characterised in that** the at least one coupling element comprises a casting compound (14, 15, 22, 23) which fills at least portions of a region between the electronic housing (7) and the printed circuit board (10),
wherein the casting compound may be subdivided by means of a partition wall (20) into a first casting compound (22) and a second casting compound (23), wherein the second casting compound (23) has a lower resilience than the first casting compound (22) and wherein the second casting compound (23) is arranged in the vibration sensor (13).

6. Electric motor according to any one of claims 1 to 5, **characterised in that** the at least one coupling element comprises an adhesive pad (21) or an adhesive.

7. Electric motor according to any one of claims 1 to 6, **characterised in that** the at least one coupling element comprises a plastics material overmoulding (25) which is fitted to at least portions of the electric motor (1), wherein the at least one vibration sensor (13) is preferably in direct contact with the plastics material overmoulding (25) .

8. Electric motor according to any one of claims 1 to 7, **characterised in that** the at least one coupling element comprises a securing means, wherein the securing means is preferably formed by means of a screw (16), a rivet, a clamp, a dowel pin or a grooved pin, wherein the securing means is preferably arranged close to the vibration sensor (13).

9. Electric motor according to any one of claims 1 to 8, **characterised in that** the electronic housing (7) is formed on a stator bushing (6) of the electric motor (1).

10. Electric motor according to any one of claims 1 to 9, **characterised in that** the electric motor (1) is formed by means of an EC motor - Electronically Commutated motor.

11. Electric motor according to any one of claims 1 to 10, **characterised in that** the electronic housing (7) has a base (8) and side walls (9), and **in that** the base (8) and/or the side walls (9) is/are coated or covered with a plastics material (18).

12. Ventilator having an electric motor according to any one of claims 1 to 11 and an impeller, wherein the impeller is connected to the rotor of the electric motor.

13. Method for evaluating a vibration state of an electric motor, in particular an electric motor according to any one of claims 1 to 11, comprising the steps of:
producing a measurement signal using at least one vibration sensor, wherein the at least one vibration sensor is arranged on a printed circuit board (10) of a motor electronic unit of the electric motor (1) and is constructed to measure an acceleration and/or a speed of vibrations of the electric motor in at least one direction,
establishing an amplitude and/or a phase and/or a frequency of the measurement signal in order to determine at least one parameter of the vibration of the electric motor,
comparing the determined at least one parameter with a corresponding reference parameter, and
determining a vibration state of the electric motor based on a result of the comparison of the determined at least one parameter with the corresponding reference parameter.

14. Method according to claim 13, **characterised in that** based on the determined vibration state a warning notification is produced and/or measures to protect the electric motor are initiated.

15. Method according to claim 13 or 14, **characterised in that**, prior to the comparison of the determined at least one parameter with the corresponding reference parameter, it is verified whether the at least one parameter exceeds a predefined limit value.

## Revendications

1. Moteur électrique avec un stator (2), un rotor monté de manière rotative par rapport au stator et une électronique de moteur, dans lequel l'électronique de moteur est disposé dans un boîtier électronique (7) et monté sur un circuit imprimé (10),
**caractérisé en ce que**, sur le circuit imprimé (10) est disposé au moins un capteur de vibrations (13) qui est conçu pour la mesure d'une accélération et/ou d'une vitesse de vibrations du moteur électrique (1) dans au moins une direction et **en ce que** le circuit imprimé (10) est couplé en vibration au moyen d'au moins un élément de couplage avec d'autres composants du moteur électrique (1), de façon à ce qu'au moins une partie des vibrations du moteur électrique puisse être transmise au capteur de vibrations (13).

2. Moteur électrique selon la revendication 1, **caractérisé en ce que** le boîtier électronique (7) comprend un fond (8) et de préférence des parois latérales (9),
dans lequel l'au moins un capteur de vibrations (13) est disposé de préférence sur un côté du circuit imprimé (10) orienté vers le fond (8) du boîtier électronique (7).

3. Moteur électrique selon la revendication 2, **caractérisé en ce que** le fond (8) du boîtier électronique (7) comprend, au niveau de l'au moins un capteur de vibrations (13), un bossage (19) de façon à ce que la distance entre l'au moins un capteur de vibrations (13) et le boîtier électronique (7) soit réduite.

4. Moteur électrique selon l'une des revendications 1 à 3, **caractérisé en ce que** l'au moins un élément de couplage est constitué d'une matière plastique.

5. Moteur électrique selon l'une des revendications 1 à 4, **caractérisé en ce que** l'au moins un élément de couplage comprend une masse de scellement (14, 15, 22, 23) qui remplit au moins des parties d'une zone entre le boîtier électronique (7) et le circuit imprimé (10),
dans lequel la masse de scellement peut être divisé, au moyen d'une cloison (20), en une première masse de scellement (22) et une deuxième masse de scellement (23), dans lequel la deuxième masse de scellement (23) présente une élasticité plus faible que la première masse de scellement (22) et dans lequel la deuxième masse de scellement (23) est disposée près du capteur de vibrations (13).

6. Moteur électrique selon l'une des revendications 1 à 5, **caractérisé en ce que** l'au moins un élément de couplage comprend un patin adhésif (21) ou une colle.

7. Moteur électrique selon l'une des revendications 1 à 6, **caractérisé en ce que** l'au moins un élément de couplage comprend une injection de matière plastique (25) qui est montée au moins sur des parties du moteur électrique (1), dans lequel l'au moins un capteur de vibrations (13) est de préférence en contact direct avec l'injection de matière plastique (25).

8. Moteur électrique selon l'une des revendications 1 à 7, **caractérisé en ce que** l'au moins un élément de couplage comprend un moyen de fixation, dans lequel le moyen de fixation est constitué de préférence d'une vis (16), d'un rivet, d'une agrafe, d'une goupille de serrage ou d'un clou cannelé, dans lequel le moyen de fixation est disposé de préférence près du capteur de vibrations (13).

9. Moteur électrique selon l'une des revendications 1 à 8, **caractérisé en ce que** le boîtier électronique (7) est formé au niveau d'une douille de stator (6) du moteur électrique (1).

10. Moteur électrique selon l'une des revendications 1 à 9, **caractérisé en ce que** le moteur électrique (1) est constitué d'un moteur EC - Electrically Commutated.

11. Moteur électrique selon l'une des revendications 1 à 10, **caractérisé en ce que** le boîtier électronique (7) comprend un fond (8) et des parois latérales (9) et **en ce que** le fond (8) et/ou les parois latérales (9) est/sont revêtu(es) ou recouvert(es) d'une matière plastique (18).

12. ventilateur avec un moteur électrique selon l'une des revendications 1 à 11 et une roue, dans lequel la roue est reliée avec le rotor du moteur électrique.

13. Procédé d'évaluation d'un état vibratoire d'un moteur électrique, plus particulièrement d'un moteur électrique selon l'une des revendications 1 à 11, comprenant les étapes suivantes :
production d'un signal de mesure au moyen d'au moins un capteur de vibrations, dans lequel l'au moins un capteur de vibrations est disposé sur un circuit imprimé (10) d'une électronique du moteur électrique (1) et est conçu pour la mesure d'une accélération et/ou d'une vitesse de vibrations du moteur électrique dans au moins une direction,
détermination d'une amplitude et/ou d'une phase et/ou d'une fréquence du signal de mesure pour la détermination d'au moins une grandeur caractéristique de la vibration du moteur électrique,
comparaison de l'au moins une grandeur caractéristique déterminée avec une grandeur caractéristique de référence correspondante et
détermination d'un état vibratoire du moteur électrique sur la base d'un résultat de la comparaison de l'au moins une grandeur caractéristique déterminée avec la grandeur caractéristique de référence correspondante.

14. Procédé selon la revendication 13, **caractérisé en ce que**, sur la base de l'état vibratoire déterminé, un message d'alarme est généré et/ou des mesures sont appliquées pour la protection du moteur électrique.

15. Procédé selon la revendication 13 ou 14, **caractérisé en ce que**, avant la comparaison de l'au moins une grandeur caractéristique déterminée avec la grandeur caractéristique de référence correspondante, il est vérifié si l'au moins une grandeur caractéristique dépasse une valeur limite prédéfinie.
